(19) **Europäisches Patentamt**

**European Patent Office**

**Office européen des brevets**

(11) **EP 1 458 821 B1**

(12) **EUROPEAN PATENT SPECIFICATION**

(45) Date of publication and mention
of the grant of the patent:
**17.05.2006 Bulletin 2006/20**

(51) Int Cl.:
**C09D 5/16** (2006.01)

(21) Application number: **02790272.5**

(22) Date of filing: **20.12.2002**

(86) International application number:
**PCT/DK2002/000883**

(87) International publication number:
**WO 2003/027194 (03.04.2003 Gazette 2003/14)**

(54) **NON-AQUEOUS DISPERSION BASED ANTIFOULING PAINT COMPOSITION**

FÄULNISVERHINDERNDE ANSTRICHZUSAMMANSETZUNG AUF BASIS VON NICHT-WÄSSRIGER DISPERSION

DISPERSION NON AQUEUSE REPOSANT SUR UNE COMPOSITION DE PEINTURE ANTISALISSURE

(84) Designated Contracting States:
**AT BE BG CH CY CZ DE DK EE ES FI FR GB GR IE IT LI LU MC NL PT SE SI SK TR**

(30) Priority: **20.12.2001 DK 200101926**

(43) Date of publication of application:
**22.09.2004 Bulletin 2004/39**

(73) Proprietors:
• **HEMPEL A/S**
**2800 Kongens Lyngby (DK)**
• **Dai Nippon Toryo Co., Ltd.**
**Osaka 554 (JP)**

(72) Inventors:
• **OMOTO, Hiroaki**
**c/o Dai Nippon Toryo Co., ltd.**
**Osaka-shi, Osaka (JP)**
• **TAKAHASHI, Toshiya**
**c/o Dai Nippon Toryo Co., Ltd**
**Osaka-shi, Osaka (JP)**
• **HAYASHI, Hiroki**
**c/o Dai Nippon Toryo Co., Ltd.**
**Otawara-shi, Tochigi-ken (JP)**
• **TANABE, Tomohiro,**
**c/o Dai Nippon Toryo Co., Ltd**
**Otawara-shi, Tochigi-ken (JP)**
• **TANABE, Hiroyuki**
**Dai Nippon Toryo Co., Ltd.**
**Osaka-shi**
**Osaka (JP)**

• **TAKI, Tohru**
**c/o Dai Nippon Toryo Co., Ltd.**
**Otawara-shi, Tochigi-ken (JP)**
• **IWASE, Yoshiyuki**
**c/o Dai Nippon Toryo Co., Ltd.**
**Osaka-shi, Osaka (JP)**
• **YOKOCHI, Chugo**
**c/o Dai Nippon Toryo Co., Ltd.**
**Osaka-shi, Osaka (JP)**
• **NISHIMOTO, Munehiro**
**Osaka -shi, Osaka (JP)**
• **CODOLAR, Santiago Arias**
**08015 Barcelona (ES)**
• **PEDERSEN, Michael Stanley**
**2000 Frederiksberg (DK)**
• **BADIA, Antoni Sánchez**
**08830 Sant Boi de Llobregat,**
**Barcelona (ES)**
• **BUCHWALD, Frants**
**DK-3230 Graested (DK)**

(74) Representative: **Inspicos A/S**
**Böge Allé 5**
**P.O. Box 45**
**2970 Hörsholm (DK)**

(56) References cited:
**EP-A- 0 802 243        WO-A-01/60932**
**US-A- 5 374 665**

**Description**

**FIELD OF THE INVENTION**

The present invention relates to the field of non-aqueous dispersion (NAD) resin based paint compositions (NAD paint compositions) that exhibit excellent mechanical and antifouling properties.

**BACKGROUND OF THE INVENTION**

Non-aqueous dispersion (NAD) resin based paint compositions are known in the art, i.a. from JP 11-43629-A, JP 2000-63709-A, JP 2001-279190-A, JP 2002-194268-A and US 5,374,665.

JP 11-43629-A discloses NAD paint compositions comprising a monobasic acid compound which contains a carboxy group, and an antifouling agent comprising a metal. Among the numerous types of monobasic acids is mentioned abietic acid. None of the examples describe the use of abietic acid, neither is any particular preference for abietic acid expressed.

JP 2000-63709-A discloses NAD paint compositions comprising metal soaps of monobasic acids and an antifouling agent comprising a metal. The metal soaps are of copper, zinc, cobalt, manganese, calcium, iron, aluminium, magnesium, nickel, etc. Among the numerous types of monobasic adds is mentioned abietic acid. None of the examples describe the use of abietic acid, neither is any particular preference for abietic acid expressed.

US 5,374,665 discloses NAD paint compositions comprising an antifouling agent. Rosin is mentioned as a possible further resin that should be compatible with the NAD resin. Examples 3 and 4 illustrate NAD paint compositions comprising rosin.

In the maturing field of NAD resin based paint compositions, it is an aim to prepare compositions which will result in mechanically more durable coatings as certain mechanical defects in relation to hardness after application and disintegration when exposed to weathering can be identified for the coatings of the known NAD paint compositions.

JP 2001-279190-A addresses this problem and discloses NAD paint compositions comprising polymers of silyl esters of acrylic acids in the core and/or in the shell component of the NAD particles. The silyl esters constitute 5-80% by weight of the polymers. As optional components are, e.g., mentioned pigments, fibrous materials, plasticizers, modifying resins such as soluble acrylic resins and polyvinyl ether, rosin and derivatives and metal salts thereof, hydrating agents, etc. None of the examples describe the use of rosin.

JP 2002-194268-A discloses paint compositions, possibly NAD paint compositions having polymers of fairly complex silyl esters of acrylic acid in the core and/or in the shell component of the NAD particles. As optional components are, e.g., mentioned pigments, rosin and derivatives and metal salts thereof, modifying resins such as acrylic resins and polyvinyl ether, plasticizers, fibrous materials, etc. None of the examples describe the use of rosin. In the field of paint technology, it is generally understood that the presence of rosin in a composition will provide some beneficial properties but at the same time the mechanical properties are at stake (see, e.g., EP 0 802 243 A2).

Whereas the use of polymers containing silyl esters of acrylic acids may solve some problems relating to mechanical deficiencies, there is still the need for alternative paint compositions that do not (exclusively) rely on the proposed advantageous properties of polymer containing silyl esters of acrylic acids, not the least for the reason that polymers containing silyl esters of acrylic acids are fairly expensive.

**DESCRIPTION OF THE INVENTION**

The present invention provides an intriguing solution to the mechanical problems realised for the known compositions by providing the antifouling paint composition defined in claim 1. This solution is uniquely surprising in that addition of rosin principles to a paint composition, albeit providing certain beneficial properties, would be expected to decrease the mechanical strength of said paint.

The present invention thus provides an antifouling paint composition comprising a non-aqueous dispersion resin, said resin having a core-shell structure which is constituted of

(a) a hydrophilic core component comprising a polymer of ethylenically unsaturated monomers, 5-75% by weight of said monomers comprising free acid groups and at the most 3% by weight of said monomers comprising silyl ester groups,

(b) a shell component comprising a polymer of ethylenically unsaturated monomers, wherein less than 3% by weight of said monomers comprising free acid groups or silyl ester groups,

said resin having an acid value of in the range of 15-400 mg KOH/g wherein the core component accounts for at least 80% of the acid value of the resin,

said paint composition further comprising rosin wherein at the most 90% by weight of the rosin has conjugated, non-aromatic double bonds, at least 25% of said rosin being in the form of a metal resinate, said metal resinate constituting in the range of 1-40% by wet weight of the composition, dry weight ratio between (i) NAD and (ii) rosin and metal resinates being in the range of 100:15 to 15:100.

The terms "non-aqueous dispersion resin", "NAD" and similar expressions are intended to mean a shell-core structure that includes a resin obtained by stably dispersing a high-polarity, high-molecular weight resin particulate component (the "core component") into a non-aqueous liquid medium in a low-polarity solvent using a high-molecular weight component (the "shell component").

The non-aqueous dispersion resin may be prepared by a method wherein a polymerisable ethylenically unsaturated monomer which is soluble in a hydrocarbon solvent and which is polymerisable to form a polymer (the core component) which is insoluble in the hydrocarbon solvent, is subjected to dispersion polymerisation in accordance with a conventional method in the hydrocarbon solvent in the presence of a shell component (the dispersion stabiliser) made of a polymer which dissolves or swells in the solvent.

The non-aqueous dispersion-type resin utilised in this invention can be a resin known per se; or it can be produced like the known resins. Such non-aqueous dispersion-type resins and method for their preparation are described in, e.g., US 3,607,821, US 4,147,688, US 4,493,914 and US 4,960,828, Japanese Patent Publication No. 29,551/1973 and Japanese Laid-open Patent Application No. 177,068/1982. Specifically, as the shell component constituting the non-aqueous dispersion-type resin, various high-molecular substances soluble in a low-polarity solvent which are described in, e.g., US 4,960,828 (Japanese Laid-open Patent Application No. 43374/1989), can be used.

From the aspect of antifouling property of the final paint composition, shell components such as an acrylic resin or a vinyl resin may be used.

As the core component, a copolymer of an ethylenically unsaturated monomer having a high polarity is generally applicable.

The non-aqueous dispersion-type resin can be formed by a method known per se. Examples thereof are a method in which the core component and the shell component are previously formed by block co-polymerization or graft co-polymerization, and they are then mixed in a low-polarity solvent and, if required, reacted to form a non-aqueous dispersion (see Japanese Patent Publication No. 29,551/1973), and a method in which a mixture of ethylenically unsaturated monomers at least one of which has a high-polarity group is copolymerised in a solvent that dissolves the ethylenically unsaturated monomer but does not dissolve a polymer (core component) formed therefrom and in the presence of a dispersion stabiliser that either dissolves or stably disperses in said solvent, and if required, the obtained copolymer is further reacted with said dispersion stabiliser to afford a final non-aqueous dispersion (see U.S. Pat. No. 3,607,821 (Japanese Patent Publication No. 48,566/1982), Japanese Laid-open Patent Application No. 177,068/1982, No. 270,972/2001, No. 40,010/2001 and No. 37,971/2002). In the latter method, the dispersion stabiliser containing in a molecule the component soluble in the low-polarity solvent and the component having affinity for the resin being dispersed, or the dispersion stabiliser of the specific composition that dissolves in the low-polarity solvent is present as the shell component, and component being dispersed as the core component is formed by copolymerisation of the monomers.

In the non-aqueous dispersion-type resin of the shell-core structure used in this invention, it is important that at least the core component has free acid groups or free acid groups and silyl ester groups that are convertible into the acid group by hydrolysis in sea water. Actually, it is expected that 5-75% by weight, e.g. 5-60% by weight or 7-50% by weight, of the monomers of the core polymer should carry free acid groups. As the free acid groups will have direct influence on the properties of the paint formulation, whereas the silyl ester groups will only have influence after hydrolysis in seawater, it is important that no more than 3% by weight of the monomers of the core component are silyl ester monomers. Typically, no more than 1% by weight of monomers of the core component are silyl ester monomers, and most often no silyl ester groups are present in the core.

Examples of silyl ester monomers are silyl esters of acrylic or methacrylic acid.

If desired, a smaller proportion of the free acid groups or silyl ester groups may also be contained in the shell component. It is, however, believed that less than 3% by weight of the monomers of shell component are free acid groups or silyl ester groups.

The expression "free acid group" is intended to cover the acid group in the acid form. It should be understood that such acid groups temporarily may exist on salt form if a suitable counter ion is present in the composition or in the environment. As an illustrative example, it is envisaged that some free acid groups may be present in the sodium salt form if such groups are exposed to salt water.

Thus, the non-aqueous dispersion-type resin have a resin acid value of usually 15-400 mg KOH/g, preferably 15 to 300 mg KOH/g, such as 18 to 300 mg KOH/g. If the total acid value of the NAD resin is below 15 mg KOH/g, the polishing rate of the paint film is too low and the antifouling property will often be unsatisfactory. On the other hand, if the total acid value is above 400 mg KOH/g, the polishing rate is too high for that reason a problem of water resistance (durability of the paint coat in seawater) becomes a problem. (When the core component and/or the shell component contains the acid precursor group, the resin acid value is one given after the group is converted into the acid group by hydrolysis). The "resin acid value" here referred to is an amount (mg) of KOH consumed to neutralise 1 g of a resin (solids content), expressing a content of an acid group (in case of the acid precursor group, a content of an acid group formed by hydrolysis) of the resin (solids content).

It is advisable that the acid group and/or the acid precursor group is contained in the core component such that the content thereof is, as a resin acid value, at least 80%, preferably at least 90%, more preferably at least 95% of the total resin acid value of the non-aqueous dispersion-type resin.

If the acid value in the core component of the NAD resin is below 80% of the total acid value of the NAD resin, i.e. the acid value of the shell component is above 20% of the total acid value, potential problems may be as described above with respect to water resistance and durability. Furthermore, if the paint composition comprises free metal ions, a problem with respect to gelation may occur if the acid value of the shell component is above 20% of the total acid value.

This being said, it is normally preferred that the shell component is hydrophobic.

The dry weight ratio of the core component to the shell component in the NAD resin is not especially limited, but is normally in the range of 90/10 to 10/90, preferably 80/20 to 25/75, such as 60/40 to 25/75.

Furthermore, it is believed that the dry matter of the non-aqueous dispersion resin normally constitutes in the range of 2-30%, such as 4-25%, preferably 5-25% such as 5-20% by wet weight of the paint composition.

As the solvent for dispersing the NAD resin that will be a binder, various organic solvents that are commonly used for paints can be used without any particular restrictions.

Examples of solvents in which the components of the NAD paint composition are dissolved or dispersed are alcohols such as methanol, ethanol, propanol, isopropanol, butanol, isobutanol and benzyl alcohol; alcohol/water mixtures such as ethanol/water mixtures; aliphatic, cycloaliphatic and aromatic hydrocarbons such as white spirit, cyclohexane, toluene, xylene and naphtha solvent; ketones such as methyl ethyl ketone, acetone, methyl isobutyl ketone, methyl isoamyl ketone, diacetone alcohol and cyclohexanone; ether alcohols such as 2-butoxyethanol, propylene glycol monomethyl ether, ethylene glycol monoethyl ether, ethyl ether and butyl diglycol; esters such as ethyl acetate, propyl acetate, methoxypropyl acetate, n-butyl acetate and 2-ethoxyethyl acetate; chlorinated hydrocarbons such as methylene chloride, tetrachloroethane and trichloroethylene; and mixtures thereof.

Useful solvents are in particular hydrocarbon type solvents and include aliphatic, alicyclic and aromatic solvents. In the present invention, it is preferred to employ an aliphatic hydrocarbon solvent and/or an alicyclic hydrocarbon solvent, or such a solvent in the major amount.

Suitable aliphatic and alicyclic hydrocarbon solvents include, for example, n-hexane, isohexane, n-heptane, n-octane, iso-octane, n-decane, n-dodecane, cyclohexane, methylcyclohexane and cycloheptane. Commercial products include, for example, mineral spirit ec, vm&p naphtha and shellzole 72 (manufactured by Shell Chemical Co.); naphtha no. 3, naphtha no. 5, naphtha no. 6 and solvent no. 7 (manufactured by Exxon Chemical Co.); ip solvent 1016, ip solvent 1620 and ip solvent 2835 (manufactured by Idemitsu Petrochemical co., ltd.); and pengazole an-45 and pengazole 3040 (manufactured by Mobile Oil Co.).

Further, the aromatic solvents include, for example, benzene, toluene, xylene and decalin. Commercial products include, for example, SOLVESSO 100 and SOLVESSO 150 (manufactured by Exxon Chemical Co.); and SWAZOLE (manufactured by Maruzen Oil Co., Ltd.).

These hydrocarbon type solvents may be used alone or in combination as a mixture of two or more of them.

The paint composition of the invention further comprises rosin wherein at the most at the most 90% by weight of the rosin has conjugated, non-aromatic double bonds.

It is believed that the content of rosin having "conjugated, non-aromatic double bonds" will have a certain impact on the overall mechanical properties of the paint composition. Thus, it is believed that at the most 90% by weight of the rosin should have conjugated non-aromatic double bonds. Without being bound to any specific theory, even lower contents e.g. at the most 50% by weight, such as at the most 40% by weight, of the rosin may advantageously have conjugated, non-aromatic double bonds as such types of rosin are believed to provide better mechanical properties.

The terms rosin, resinates and the like is intended to refer to gum rosin; wood rosin of grades B, C, D, E, F, FF, G, H, I, J, K, L, M, N, W-G, W-W (as defined by the ASTM D509 standard); virgin rosin; hard rosin; yellow dip rosin; NF wood rosin; tall oil rosin; or colophony or colophonium. The terms rosin resinates and the like are also intended to include suitable types of modified rosin, in particular oligomerisation; hydrogenation; dehydrogenation-hydrogenation/ disproportionation/dismutation; etc., that will reduce the amount of conjugated non-aromatic double bonds.

At least 25% of said rosin should be in the form of a metal resinate. Preferably, at least 40%, such as at least 50%, e.g. at least 60%, in particular at least 75%, or event at least 90%, or more, of the rosin is in the form of a metal resinate.

Also, said metal resinate advantageously constitutes in the range of 1-40%, or 1-30%, or 1-15%, e.g. 2-13%, such as 2.5-10%, by wet weight of the composition.

It is known that rosin with free acidic groups (e.g. carboxylic acid groups) is able to form salts, e.g., with metal oxides. Thus, metal resinates can either be obtained commercially or may be prepared prior to mixing with the other paint constituents. The metal resinates may also be the result of a reaction between rosin components and metal constituents of a paint. However, in this instance it is important to ensure that reaction between e.g. metal oxides and the rosin has proceeded to the desired level.

Determination of the content of conjugated, non-aromatic double bonds (abietic acid and abietic acid-type compounds) may be performed by using ultraviolet spectroscopy (UV) techniques or infrared spectroscopy (IR) (preferably Fourier transformation IR) techniques as realised by the person skilled in the art, e.g. as described in Naval Stores (Stump, J.H. ed.), Chapter 25: Quality Control (Tall oil, rosin and fatty acids), page 860, and ASTM - Designation D 1358-86. In the present context, the value is preferably determined as described in the Examples section.

The metal to be used as a part of the metal resinate is typically a metal selected from zinc, copper, calcium, magnesium, iron and aluminium, most suitably from zinc, copper, and calcium, such as zinc and calcium. It is presently believed that metal resinates of zinc are particularly advantageous.

The ratio between the non-aqueous dispersion resin and the content of rosin and metal resinate preferably fulfils the following criteria, namely that the weight ratio between on the one hand dry matter of NAD and on the other hand rosin and metal resinates is in the range of 100: 15 to 15: 100 such as in the range of 100:25 to 25: 100.

The paint composition may also comprise one or more antifouling agents as is customary within the field. Examples of antifouling agents are: metallo-dithiocarbamates such as bis(dimethyldithiocarbamato)zinc, ethylene-bis (dithiocarbamato)zinc, ethylene-bis(dithiocarbamato)manganese, and complexes between these; bis(1-hydroxy-2 (1H)-pyridine-thionato-O,S)-copper; copper acrylate; bis(1-hydroxy-2(1H)-pyridinethionato-O,S)-zinc; phenyl(bispyridyl)-bismuth dichloride; metal biocides such as copper, copper metal alloys such as copper-nickel alloys; metal oxides such as cuprous oxide ($Cu_2O$) and cupric oxide (CuO) (even though e.g. cuprous oxide and cupric oxide may have pigment characteristics, it is understood that in the present context such agents are only considered as "antifouling agents"); metal salts such as cuprous thiocyanate, basic copper carbonate, copper hydroxide, barium metaborate, and copper sulphide; heterocyclic nitrogen compounds such as 3a,4,7,7a-tetrahydro-2-((trichloromethyl)-thio)-1H-isoindole-1,3(2H)-dione, pyridine-triphenylborane, 1-(2,4,6-trichlorophenyl)-1H-pyrrole-2,5-dione, 2,3,5,6-tetrachloro-4-(methylsulfonyl)-pyridine, 2-methylthio-4-tert-butylamino-6-cyclopropylamine-s-triazin, and quinoline derivatives; heterocyclic sulfur compounds such as 2-(4-thiazolyl)benzimidazole, 4,5-dichloro-2-n-octyl-4-isothiazolin-3-one, 4,5-dichloro-2-octyl-3(2H)-isothiazoline, 1,2-benzisothiazolin-3-one, and 2-(thiocyanatomethylthio)-benzothiazole; urea derivatives such as N-(1,3-bis(hydroxymethyl)-2,5-dioxo-4-imidazolidinyl)-N,N'-bis(hydroxymethyl)urea, and N-(3,4-dichlorophenyl)-N,N-dimethylurea, N,N-dimethylchlorophenylurea; amides or imides of carboxylic acids; sulfonic acids and of sulfenic acids such as 2,4,6-trichlorophenyl maleimide, 1,1-dichloro-N-((dimethylamino)-sulfonyl)-1-fluoro-N-(4-methylphenyl)-methanesulfenamide, 2,2-dibromo-3-nitrilopropionamide, N-(fluorodichloromethylthio)-phthalimide, N,N-dimethyl-N'-phenyl-N'-(fluorodichloromethylthio)-sulfamide, and N-methylol formamide; salts or esters of carboxylic acids such as 2-((3-iodo-2-propynyl)oxy)-ethanol phenylcarbamate and N,N-didecyl-N-methyl-poly(oxyethyl)ammonium propionate; amines such as dehydroabiethylamines and cocodimethylamine; substituted methane such as di(2-hydroxy-ethoxy)methane, 5,5'-dichloro-2,2'-dihydroxydiphenylmethane, and methylenebisthiocyanate; substituted benzene such as 2,4,5,6-tetrachloro-1,3-benzenedicarbonitrile, 1,1-dichloro-N-((dimethylamino)-sulfonyl)-1-fluoro-N-phenylmethanesulfenamide, and 1-((diiodomethyl)sulfonyl)-4-methyl-benzene; tetraalkyl phosphonium halogenides such as tri-n-butyltetradecyl phosphonium chloride; guanidine derivatives such as n-dodecylguanidine hydrochloride; disulfides such as bis-(dimethylthiocarbamoyl)-disulfide, tetramethylthiuram disulfide; and mixtures thereof.

Presently, it is preferred that the antifouling agent is an agent that does not comprise tin.

The total amount of the antifouling agent(s), if present, is typically in the range of 0-80%, such as 2-75%, by wet weight of the paint, e.g. 5-75%, such as 5-70%, by wet weight of the paint. Depending upon the type and specific activity of the antifouling agent, the total amount of the antifouling agent may, *e.g.*, be 5-60% or 10-50% by wet weight of the paint. This being said and due to the high density of cuprous oxide ($Cu_2O$), the total amount of antifouling agent (s) is suitably at least 20%, such as 20-75%, by wet weight when cuprous oxide is present. In one embodiment, the $Cu_2O$ content is at least 20% by wet weight, such as in the range of 20-75% by wet weight.

The total amount of any organic antifouling agent is preferably in the range of 0.1-10%, e.g. 0.5-8%, by wet weight of the paint.

The ratio between the non-aqueous dispersion resin and $Cu_2O$ preferably fulfils the following criteria, namely that the weight ratio between on the one hand dry matter of NAD and on the other hand $Cu_2O$ is in the range of 1:1 to 1:10.

Apart from the above constituents, the paint composition may also comprise fibres (e.g. those generally and specifically described in WO 00/77102 which is hereby incorporated by reference).

In order for a certain particle to be considered as a fibre within the present context, the ratio between the greatest dimension and the smallest dimension perpendicular to the length dimension in substantial all points along the longitudinal axis (the length dimension - longest dimension) should not exceed 2.5:1, preferably not exceeding 2: 1. Furthermore, the ratio between the longest dimension and the average of the two shortest dimensions should be at least 5:1. Thus, fibres are characterised of having one long dimension and two short dimension, where the long dimension is substantially longer than the two short dimensions (typically by an order of magnitude, or even more), and the two short dimensions are substantially equal (of the same order of magnitude). For completely regular fibres, 1.6. fibresihaving a cylindrical shape, it is evident how to determine the "length" (longest dimension) and the two (identical) shortest dimensions. For more irregular fibres, it is believed that the relationship between the dimensions can be evaluated by the following hypothetical experiment: A regular, right-angled box is constructed around the fibre. The box is constructed so as to have the smallest possible volume, as it should fully comprise the fibre. To the extent that the fibre is curved, it is (again hypothetically) assumed that the fibre is flexible so that the volume of the hypothetical box can be minimised by "bending" the fibre. In order for the "fibre" to be recognised as such in the present context, the ratio between the two smallest dimensions of the box should be at the most 2.5:1 (preferably 2:1) and the ratio between the longest dimension of the box and the average of the to smallest dimensions of the box should be at least 5:1.

At present, especially preferred are mineral fibres such as mineral-glass fibres, wollastonite fibres, montmorillonite fibres, tobermorite fibres, atapulgite fibres, calcined bauxite fibres, volcanic rock fibres, bauxite fibres, rockwool fibres, and processed mineral fibres from mineral wool.

It is however also presently believed that some organic fibres can be especially advantageous within the present invention. Particularly preferred examples of such fibres are aromatic polyamide fibres; aromatic polyester fibres; aromatic polyimide fibres; cellulose fibres; cotton fibres; wood fibres; rubber fibres and fibres of derivatives of rubber; polyolefin fibres; polyacetylene fibres; polyester fibres; acrylic fibres and modified acrylic fibres; acrylonitrile fibres (e.g. preoxidised acrylonitrile fibres); elastomeric fibres; protein fibres; alginate fibres; poly(ethylene terephthalate) fibres; polyvinyl alcohol fibres; aliphatic polyamide fibres; polyvinylchloride fibres; polyurethane fibres; vinyl polymeric fibres; and viscose fibres. Presently even more preferred examples of such fibres are polyethylene fibres, polypropylene fibres, cotton fibres, cellulose fibres, polyacrylonitrile fibres, preoxidised polyacrylonitrile fibres, and polyester fibres.

In view of the above, it is presently believe that a particularly interesting group of fibres (including inorganic as well as organic fibres) is mineral fibres such as mineral-glass fibres, wollastonite fibres, montmorillonite fibres, tobermorite fibres, atapulgite fibres, calcined bauxite fibres, volcanic rock fibres, bauxite fibres, rockwool fibres, processed mineral fibres from mineral wool, polyethylene fibres, polypropylene fibres, cotton fibres, cellulose fibres, polyacrylonitrile fibres, preoxidised polyacrylonitrile fibres, and polyester fibres.

When present, the concentration of the fibres is normally in the range of 0.1-50%, e.g. 0.1-25% by wet weight of the paint, such as 0.5-10% by wet weight of the paint. Especially relevant concentrations of fibres, depending upon the type and size of the fibres, may be 2-10%, such as 2-7%, or 3-10%, such as 3-8% by wet weight of the paint.

It should be understood that the above ranges refer to the total amount of fibres, thus, in the case where two or more fibre types are utilised, the combined amounts should fall within the above ranges.

The blend proportions of the respective components constituting the NAD paint composition of the present invention are usually such that the dry matter of the non-aqueous dispersion resin normally constitutes in the range of 2-30%, such as 4-25%, preferably 5-25% such as 5-20% by wet weight of the paint composition, the combination of rosin and the metal resinate constitutes in the range of 1-40%, or 1-30%, or 1-15%, e.g. 2-13%, such as 2.5-10%, by wet weight of the paint composition, the antifouling agent constitutes from 0 to 80%, preferably from 2-75% such as 5-60% by wet weight, and the solvent constitutes from 10 to 60% such as 10-50%, preferably from 10 to 40 such as 15-40% by wet weight of the paint composition.

Pigments, fillers, dyes and various additives are not essential constituting components. However, such pigments, fillers, dyes and the additives may be incorporated in a total amount of up to 60% such as 50% by wet weight, e.g. in amounts of 0.1-40% or 0.1-30% by wet weight.

Examples of pigments are grades of titanium dioxide, red iron oxide, zinc oxide, carbon black, graphite, yellow iron oxide, red molybdate, yellow molybdate, zinc sulfide, antimony oxide, sodium aluminium sulfosilicates, quinacridones, phthalocyanine blue, phthalocyanine green, titaniumdioxide, black iron oxide, graphite, indanthrone blue, cobalt aluminium oxide, carbazole dioxazine, chromium oxide, isoindoline orange, bis-acetoacet-o-tolidiole, benzimidazolon, quinaphtalone yellow, isoindoline yellow, tetrachloroisoindolinone, quinophthalone yellow. Such materials are characterised in that they render the final paint coating non-transparent and non-translucent. The pigments may further be selected from pigment-like ingredients such as fillers.

Examples of fillers are calcium carbonate, dolomite, talc, mica, barium sulfate, kaolin, silica, perlite, magnesium oxide, calcite and quartz flour, etc. These materials are characterised in that they do not render the paint non-translucent and therefore do not contribute significantly to hide any material below the coating of the paint of the invention.

In a preferred embodiment of the present invention, the paint has a total pigment content (pigment and pigment-like ingredients) in the range of 1-60%, preferably 1-50%, such as 5-40% in particular 1-25% such as 1-15%, of the wet weight of the paint.

Examples of dyes are 1,4-bis(butylamino)anthraquinone and other anthraquinone derivatives; toluidine dyes etc.

Examples of additives are plasticizers such as chlorinated paraffin; phthalates such as dibutyl phthalate, benzylbutyl phthalate, dioctyl phthalate, diisononyl phthalate and diisodecyl phthalate; phosphate esters such as tricresyl phosphate, nonylphenol phosphate, octyloxipoly(ethyleneoxy)ethyl phosphate, tributoxyethyl phosphate, isooctylphosphate and 2-ethylhexyl diphenyl phosphate; sulfonamides such as N-ethyl-p-toluensulfonamide, alkyl-p-toluene sulfonamide; adipates such as bis(2-ethylhexyl)-adipate), diisobutyl adipate and dioctyladipate; phosphoric acid triethyl ester; butyl stearate; sorbitan trifoliate; and epoxidised soybean oil; surfactants such as derivatives of propylene oxide or ethylene oxide such as alkylphenol-ethylene oxide condensates; ethoxylated monoethanolamides of unsaturated fatty acids such as ethoxylated monoethanolamides of linoleic acid; sodium dodecyl sulfate; alkylphenol ethoxylates; and soya lecithin; wetting agents and dispersants such as those described in M. Ash and I. Ash, "Handbook of Paint and Coating Raw Materials, Vol. 1", 1996, Gower Publ. Ltd., Great Britain, pp 821-823 and 849-851; defoaming agents such as silicone oils; stabilisers such as stabilisers against light and heat, e.g. hindered amine light stabilisers (HALS), 2-hydroxy-4-methoxybenzophenone, 2-(5-chloro-(2H)-benzotriazol-2-yl)-4-methyl-6-(tert-butyl)phenol, and 2,4-ditert-butyl-6-(5-chlorobenzotriazol-2-yl)phenol; stabilisers against moisture such as molecular sieves or water scavengers such as synthetic zeolites, substituted isocyanates, substituted silanes and ortho formic acid triethyl ester; stabilisers against oxidation such as butylated hydroxyanisole; butylated hydroxytoluene; propyl-gallate; tocopherols; 2,5-di-tert-butyl-hydroquinone; L-ascorbyl palmitate; carotenes; vitamin A; inhibitors against corrosion such as aminocarboxylates, calcium silicophosphate, ammonium benzoate, barium/calcium/zinc/magnesium salts of alkylnaphthalene sulfonic acids, zinc phosphate; zinc metaborate; coalescing agents such as glycols, 2-butoxy ethanol, and 2,2,4-trimethyl-1,3-pentanediol monoisobutyrate; and thickeners and antisettling agents such as colloidal silica, hydrated aluminium silicate (bentonite), aluminiumtristearate, aluminiummonostearate, ricinus oil, xanthan gum, salicylic acid, chrysotile, pyrogenic silica, hydrogenated castor oil, organo-modified clays, polyamide waxes and polyethylene waxes. Dehydrating agents such as synthetic zeolite, sepiolite, anhydrous gypsum, orthopropionic acid ester, orthoformic acid ester, orthoacetic acid ester alkoxysilane, alkyl silicates like tetra ethyl ortosilicate, or isocyanates.

It is preferred that the paints according to the present invention comprises dyes and additives in a cumulative content of 0.1-10%, e.g. 1-10%, by wet weight.

As will be understood by the person skilled in the art, one or several further binder components may be present in the binder system beside the NAD core-shell structures. Examples of such further binder components are:

oils such as linseed oil and derivatives thereof; castor oil and derivatives thereof; soy bean oil and derivatives thereof;

other polymeric binder components such as saturated polyester resins; polyvinylacetate, polyvinylbutyrate, polyvinylchloride-acetate, copolymers of vinyl acetate and vinyl isobutyl ether; vinylchloride; copolymers of vinyl chloride and vinyl isobutyl ether; alkyd resins or modified alkyd resins; hydrocarbon resins such as petroleum fraction condensates; chlorinated polyolefines such as chlorinated rubber, chlorinated polyethylene, chlorinated polypropylene; styrene copolymers such as styrene/butadiene copolymers, styrene/methacrylate and styrene/acrylate copolymers; acrylic resins such as homopolymers and copolymers of methyl methacrylate, ethyl methacrylate, n-butyl methacrylate, isobutyl methacrylate and isobutyl methacrylate; hydroxy-acrytate copolymers; polyamide resins such as polyamide based on dimerised fatty acids, such as dimerised tall oil fatty adds; cyclised rubbers; epoxy esters; epoxy urethanes; polyurethanes; epoxy polymers; hydroxy-polyether resins; polyamine resins; etc., as well as copolymers thereof.

It should be understood that the group of other polymeric binder components may include polymeric flexibilisers such as those generally and specifically defined in WO 97/44401 that is hereby incorporated by reference.

The dry matter of such further binder components is typically 0-10% by wet weight.

In the present context, the term "% by wet weight" is intended to mean the weight/weight percentage of the wet matter of the paint. It should be understood that solvents are included.

The paint composition of the present invention is prepared usually by mixing and dispersing the above components all at once or in a divided fashion by a conventional apparatus for producing paints, such as a ball mill, a pearl mill, a three-roll mill, a high speed disperser. The paint compositions according to the invention, optionally containing fibres, may be filtrated using bag filters, patron filters, wire gap filters, wedge wire filters, metal edge filters, EGLM turnoclean filters (ex Cuno), DELTA strain filters (ex Cuno), and Jenag Strainer filters (ex Jenag), or by vibration filtration. The paint composition of the present invention thus prepared may be coated as it is or after having the viscosity adjusted by a diluting solvent, on a ship or a maritime structure having a rust preventive coating material coated thereon, by e.g. airless spray coating, air spray coating, roller coating or brush coating. The exact technique chosen depends upon the object to be protected and also upon the particular composition (such as its viscosity etc.) and upon the particular situation. Preferred applications techniques are spraying and by means of a brush or a roller.

Depending on the application technique, it is desirable that the paint comprises solvent(s) so that the SVR is in the range of 30-100%, such as 30-70%.

The paint composition according to the invention may be applied to a marine structure to be protected in one or several successive layers, typically 1 to 5 layers, preferably 1 to 3 layers. The dry film thickness (DFT) of the coating applied per layer will typically be 10 to 300 $\mu$m, preferably 20 to 250 $\mu$m, such as 40 to 200 $\mu$m. Thus, the total dry film thickness of the coating will typically be 10 to 900 $\mu$m, preferably 20 to 750 $\mu$m, in particular 40 to 600 $\mu$m, such as 80 to 400$\mu$m.

The marine structure to which the paint according to the invention may be applied to may be any of a wide variety of solid objects that come into contact with water, for example vessels (including but not limited to boats, yachts, motorboats, motor launches, ocean liners, tugboats, tankers, container ships and other cargo ships, submarines (both nuclear and conventional), and naval vessels of all types); pipes; shore and off-shore machinery, constructions and objects of all types such as piers, pilings, bridge substructures, floatation devices, underwater oil well structures etc; nets and other mariculture installations; cooling plants; and buoys; and is especially applicable to the hulls of ships and boats and to pipes.

Prior to the application of a paint of the invention to a marine structure, the marine structure may first be coated with a primer-system which may comprise several layers and may be any of the conventional primer systems used in connection with application of paint compositions to marine structures. Thus, the primer system may include an anticorrosive primer optionally followed by a layer of an adhesion-promoting primer. In a preferred embodiment, the primer-system is a composition having a polishing rate of less than 1 $\mu$m per 10,000 Nautical miles, i.e. the primer is a non-self-polishing coating.

The above-mentioned primer system may, for example, be a combination of an epoxy resin having an epoxy equivalent of from 160 to 600 with its curing agent (such as an amino type, a carboxylic acid type or an acid anhydride type), a combination of a polyol resin with a polyisocyanate type curing agent, or a coating material containing a vinyl ester resin, an unsaturated polyester resin or the like, as a binder, and, if required, further containing a thermoplastic resin (such as chlorinated rubber, an acrylic resin or a vinyl chloride resin), a curing accelerator, a rust preventive pigment, a colouring pigment, an extender pigment, a solvent, a trialkoxysilane compound, a plasticizer, an additive (such as an antisagging agent or a precipitation preventive agent), or a tar epoxy resin type coating material, as a typical example.

As mentioned herein, the coating resulting from the paint according to the present invention is preferably self-polishing. Thus, the paint composition (actually the coating) should have a polishing rate of at least 1 $\mu$m per 10,000 Nautical miles (18,520 km). Preferably the polishing rate is in the range of 1-50 $\mu$m, in particular in the range of 1-30 $\mu$m per 10,000 Nautical miles (18,520 km).

In one particular embodiment, the present invention provides an antifouling paint composition comprising:

2-30% by wet weight of the composition of dry matter of the non-aqueous dispersion resin,
1-15% by wet weight of the composition of rosin and metal resinate,
2-75% by wet weight of the composition of antifouling agents,
0-50% by wet weight of the composition of fibres,
0.1-40% by wet weight of the composition of pigments, fillers, dyes and additives,
0-10% by wet weight of the composition of dry matter of further binder components, and
10-60% by wet weight of the composition of solvents.

In another particular embodiment, the present invention provides an antifouling paint composition comprising:

4-25% by wet weight of the composition of dry matter of the non-aqueous dispersion resin,
2-13% by wet weight of the composition of rosin and metal resinate,
5-75% by wet weight of the composition of antifouling agents,
0-25% by wet weight of the composition of fibres,
0.1-30% by wet weight of the composition of pigments, fillers, dyes and additives,
0-10% by wet weight of the composition of dry matter of further binder components, and
10-40% by wet weight of the composition of solvents.

In still another particular embodiment, the present invention provides an antifouling paint composition comprising:

5-20% by wet weight of the composition of dry matter of the non-aqueous dispersion resin,
2.5-10% by wet weight of the composition of rosin and metal resinate,
5-60% by wet weight of the composition of antifouling agents,
0-10% by wet weight of the composition of fibres,
0.1-30% by wet weight of the composition of pigments, fillers, dyes and additives,
0-10% by wet weight of the composition of dry matter of further binder components, and
10-40% by wet weight of the composition of solvents.

**EXAMPLES**

The respective tests were carried out in accordance with the following methods.

Polishing Rate Test

A stainless steel test panel (13.5 x 7 cm$^2$) with a curvature corresponding to that of a cylindrical drum with a diameter of 1 m is first coated with 40 μm of an epoxy primer (Hempadur Primer 15550 ex Hempel's Marine Paints A/S). After 24 hours, the panel is coated with 80 μm (DFT) of a commercial vinyl primer (Hempanyl Tar 16280 ex Hempel's Marine Paints A/S) applied by air spraying. After minimum 24 hours drying in the laboratory at room temperature, the test paint is applied by air spraying in two coats in a DFT of approximately 100 μm per coat (total test paint DFT: 200 μm). Recoating interval between two coats of test paint: 24 hours. The panel is dried for at least 1 week in the laboratory at room temperature before testing. The initial thickness of the paint system is measured using an ISOSCOPE MP-30.
The test panel is fixed onto the convex surface of a cylindrical drum of 1 m in diameter and is rotated in sea water with a salinity in the range of 37-38 parts per thousand at an average temperature of 17-18°C at a test site in the harbour of Villanova y La Geltrú in north-eastern Spain which is situated at longitude 41.2°N (see also Morale, E. & Arias, E., Rev. Iber. Corros. y Prot., vol XIX(2), 1988, pp. 91-96). The rotor is rotated at a peripheral speed of 22 knots for a relative distance of at least 40000 Nautical miles.
The thickness is controlled with periodic inspections using the ISOSCOPE MP-30. An initial inspection is made before the 30000 NM. The polishing is the difference between the film thickness measured at a given inspection and the film thickness measured in the initial inspection. The polishing rate is expressed as the polishing measured in μm per 10,000 Nm.

Blister Box Test

*Preparation of panels*

Acrylic panels (155x100x5 mm) are first coated with 80 μm (dry film thickness, DFT) of a commercial vinyl tar primer (Hempanyl 16280, from Hempel's Marine Paints) applied by air spraying. After 12-36 hours of drying in the laboratory at room temperature, paint compositions (model paints or commercial paints) are applied by Dr. Blade of 500μm of dearance. The panels are dried for 4-5 days in the laboratory at room temperature before testing.

*Testing*

Test panels are tested in a Cleveland Condensation Tester (QCT from Q-Panel) in condensation and dry-off mode. QCT equipment is described in standard method ASTM D1735-92: Testing water resistance of coatings using water fog apparatus. Coated specimens are placed in.an enclosed chamber where cycles of water fog (10 hours)/drying (2 hours) are applied. The temperature in the chamber is maintained at 60°C. During the water fog cycle water penetrates into the film while during the drying cycle water "escapes" from the paint film.
The paints are evaluated every week for film defects as described below.
Every week the paints are evaluated with respect to the degree of cracking and the degree of flaking in accordance with the guidelines set forth in ISO standard 4628, parts 4 and 5.
Evaluation of the degree of cracking is based on the below ranking (ISO standard 4628, part 4):

| Density of cracking | Ranking Value |
|---|---|
| None | 0 |
| Less than few | 1 |
| Few | 2 |
| Medium | 3 |
| Medium - dense | 4 |
| Dense | 5 |

| Size of cracks | Ranking Value |
|---|---|
| Not visible under x 10 magnification | 0 |
| Only visible under magnification up to x 10 | 1 |

Table continued

| Size of cracks | Ranking Value |
|---|---|
| Just visible with normal corrected vision | 2 |
| Clearly visible with normal corrected vision | 3 |
| Large cracks generally up to 1 mm wide | 4 |
| Very large cracks generally more than 1 mm wide | 5 |

Evaluation of the degree of flaking is based on the below ranking (ISO standard 4628, part 5):

| Flaked area (%) | Ranking Value |
|---|---|
| 0 | 0 |
| 0.1 | 1 |
| 0.3 | 2 |
| 1 | 3 |
| 3 | 4 |
| 15 | 5 |

| Size of flaking (largest dimension) | Ranking Value |
|---|---|
| Not visible under 10 x magnification | 0 |
| Up to 1 mm | 1 |
| Up to 3 mm | 2 |
| Up to 10 mm | 3 |
| Up to 30 mm | 4 |
| Larger than 30 mm | 5 |

Rotor Test

The test panels and movement of the test panels were performed as for the Polishing Rate Test - Isoscope test variant (see above).

Every two months (for one year) panels are dried for 15 minutes and evaluated with respect to the degree of cracking and the degree of flaking in accordance with the guidelines set forth in ISO standard 4628, parts 4 and 5 as described above in connection with the Blister Box Test.

Water Jet Test

Acrylic panels (15 x 10 x 2 cm) are first coated with 40 $\mu$m (dry film thickness, DFT) of a commercial vinyl tar primer (Hempanyl 16280, from Hempel's Marine Paints) applied by air spraying. After 12-36 hours of drying in the laboratory at room temperature, paint compositions (model paints or real paints) are applied by air spraying in a single coat in a dry film thickness (DFT) of approximately 100 $\mu$m. The panels are dried for 1-3 days in the laboratory at room temperature before testing.

*Phase 1 - Ageing:*

Painted panels are fixed in a rotary drum (speed: 6 revolutions per minute) placed inside a chamber with 3 fixed nozzles (with a nozzle orifice of 1 mm$^2$) spraying continuously tab water at a pressure of 4 atm. on top of the rotary drum. The three water jets spray all paints mounted on the rotary drum for a period of 0.5 seconds every 10-second. The ageing period is 3 weeks.

*Phase 2 - Paint Recoating:*

Paints aged in phase 1 after drying at room temperature for 24 hours are recoated with a new layer of the same paint composition which is applied by air spraying in a single coat in a dry film thickness (DFT) of approximately 100 $\mu$m. The panels are dried for 1-3 days in the laboratory at room temperature before a new ageing period is initiated.

Two ageing cycles and one recoating cycle are performed.

*Final Phase:*

After the last ageing phase the paint is dried at 45°C during 24 hours and subsequently evaluated as described below.

The paints are evaluated with respect to the degree of blistering, the degree of cracking and the degree of flaking in accordance with the guidelines set forth in ISO standard 4628, parts 2, 4 and 5 as described above in connection with the Blister Box Test.

Antifouling property test

*Static Test Vilanova and Singapore*

An acrylic test panel (15 x 20 cm²), sandblasted on one side to facilitate adhesion of the coating, is first coated with 80 μm (DFT) of a commercial !vinyl tar primer (Hempanyl 16280 ex Hempel's Marine Paints A/S) applied by air spraying. After a minimum drying time of 24 hours in the laboratory at room temperature the test paint is applied with a four sided "Bar" type applicator, with four gap sizes with a film width of 80 mm. One coat in a DFT of 90-100 μm. After at least 72 hours drying the test panels are fixed on a rack and immersed in sea water.

*Vilanova variant*

Vilanova in la Geltrú in north-eastern Spain. In this test site, the panels are immersed in seawater with salinity in the range of 37-38 parts per thousand at an average temperature of 17-18°C

*Singapore variant*

In this test site, the panels are immersed in seawater with salinity in the range of 29-31 parts per thousand at a temperature in the range of 29-31°C.

Every 4-8 weeks, inspection of the panels are made and the antifouling performance is evaluated according to the following scale:

| Level | Description |
|---|---|
| EXCELLENT | Only slime |
| GOOD | Algae + Animals < 10% |
| FAIR | 10% < (Algae + Animals) < 25% |
| POOR | Algae + Animals > 25% I |

Static test Toba

Preparation of panel

An acrylic test panel (10 x 45 cm²), sandblasted on one side to facilitate adhesion of the coating, is first coated with 80 micron (DFT) of a commercial vinyl tar primer (Hempanyl 16280 ex Hempel's Marine Paints A/S) applied by air spraying. After a minimum drying time of 24 hours in the laboratory at room temperature the test paint is applied by air spraying to a DFT of 90-100 microns. After dried 72 hours, at least, the test panels are fixed on a rack and immersed in seawater.

Toba variant

Toba is located in Japan on the cost of the Pacific Ocean. In this test site, the panels are immersed in seawater.

Inspection of the panels was made and the antifouling performance is evaluated according to the scale above.

Antifouling property test

*Rotor variant*

Preparation and inspection intervals as for the "Polishing rate test".
Evaluation according to the scale above.

Artificial aging of paints using UV lamps and water condensation cycles.

An aluminium test panel is first coated with 40μm of an epoxy primer (Hempadur Primer 15550 ex Hempel's Marine Paints A/S). After 24 hours, the panel is coated with 80 μm (DFT) of a commercial vinyl primer (Hempanyl Tar 16280 ex Hempel's Marine Paints A/S) applied by air spraying. After a minimum of 24 hours drying in the laboratory at room temperature, 100 μm of DFT of the test paint is applied by air spray. The panel is dried for at least 1 week in the laboratory at room temperature before testing. The test panel coated with the test paint is placed in an apparatus described in the standard ASTM G53 with the following conditions:

UV-B lamps (peak emission at 313 nm)
Cycles:

* 4 hours of UV exposure at 60°C
* 4 hours of condensation exposure at 50 °C

The paints are evaluated after 1 day, 3 days, 1 week and then every week for film defects as described below.
The paints are evaluated with respect to the degree of cracking and the degree of flaking in accordance with the guidelines set forth in ISO standard 4628, parts 4 and 5 as described above for the Blister Box Test.

Hardness

*Pendulum Hardness*

The type of pendulum used in this test is the Konig pendulum. The description of this pendulum can be reached in the standard ISO 1522.
The paint is applied on a smooth glass panel by doctor blade applicator (DFT 100±15 μm). The size of the panels is approximately 100 mm x 100 mm x 5 mm. The panels are cleaned with a suitable solvent to remove any dirtiness of the surface before applying the paint.
The applied test paint is allowed to dry at room temperature for 7 days, and the dry film thickness (DFT) is measured.
The DFT is measured using a Mitutoyo apparatus.
The hardness value is the number of oscillations needed for the pendulum to oscillate from a vertical separation of 6° to 3°.

*Determination of the relatively molar concentration of the metal salt*

The binder phase was separated by centrifugation. The relatively molar concentration of the metal salt was determined by Fourier transform infrared spectroscopy (FTIR) using the assignment:
Cu-resinate approx. 1607 cm$^{-1}$, Zn resinate approx. 1582 cm$^{-1}$ and the rosin carbonyl approx. 1694 cm$^{-1}$
Determination of the content of conjugated, non-aromatic double bonds (abietic acid and abietic acid-type compounds)

Rosin:

Rosin was reacted with phenyltrimethylammonium hydroxide (PTMAH) in methanol to give the methyl esters of the acid components. The methyl esters of abietic- and pimaric-type acids are volatile enough to analyse by gas chromatography-flame ionization detection (GC-FID) and GC/mass spectrometry (GC/MS). The mass spectra of the methyl esters and comparisons to the literature (Mayr et al) were used to identify the individual components. Mayr et al. (Mayr M., Lorbeer E., Katzl K., Journal of the American Oil Chemist Society, 59(1), 1982) have shown that the best separation of diterpene acid methyl esters can be obtained on non-polar columns, and therefore a 5%-diphenylpolydimethylsiloxane bonded phase fused silica capillary was used for both the GC-FID and GC/MS. The GC-FID was used for quantification.

Metal resinate:

Metal resinate was first converted to the acid with HCl and hereafter treated as above.

Preparation of NAD solution

*Preparation of a dispersant (skin component) resin solution (A)*

In a four-necked flask, equipped with a stirring rod, a thermometer and a reflux condenser, 22.5 parts of mineral spirit was charged, and kept the temperature at 100 °C. Twenty five parts of n-butylmethacrylate, 25 parts of 2-ethylhexylacrylate and 0.15 parts of Kayaester-O (a trademark for a t-butyl peroxy-2-ethylhexanoate supplied by Kayaku-Akzo Co., Ltd.) were added drop-wise under stirring over 3 hours. After finishing the addition, dropping funnel was washed with 1 part of mineral spirit, and added it into flask. Subsequently, a mixture of 0.25 parts of Kayaester-O and 10 parts of mineral spirit was added drop-wise over 1 hour. After finishing the addition, a dropping funnel was also washed with 1 part of mineral spirit, and added it into flask. The reaction was maintained 2 hours, then the reaction mixture was diluted with 15.1 parts of mineral spirit to obtain a colourless dear dispersant resin solution (A) having a 50 % of solid content and 99,000 of weight average molecular weight.

*Preparation of a non-aqueous dispersion type resin solution (I)*

In a same device as a preparation of dispersant resin solution (A), 66.7 parts of dispersant resin solution (A) was charged, and kept the temperature at 105°C. 7.95 parts of methylmethacrylate, 3.6 parts of ethyl acrylate, 5.1 parts of methacrylic acid and 0.415 parts of Niper BMT-K40 (a trademark for a 40% xylene solution of m-toluoyl or benzoyl peroxide supplied by Nippon-Yushi Co., Ltd.) were added drop-wise under stirring over 3 hours. Subsequently, a mixture of 0.21 parts of Niper BMT-K40 and 2 parts of mineral spirit was added drop-wise over 1.5 hours. After finishing the addition, a dropping funnel was washed with 0.5 part of mineral spirit, and added it into flask. The reaction was maintained 2 hours, then the reaction mixture was diluted with 13.525 parts of mineral spirit to obtain a opaque white coloured non-aqueous dispersion type resin solution (I) having a 50 % of solid content, 71 mgKOH/g (as a solid content) of acid value and 81,000 of weight average molecular weight.

*Preparation of a dispersant (skin component) resin solution (B)*

In a 100 L scale of stainless (SUS304) vessel reactor, with a stirring system, an automatic thermo controlling system and a reflux condenser, 22.5 parts of mineral spirit was charged, and kept the temperature at 100 °C. Twenty five parts of n-butylmethacrylate, 25 parts of 2-ethylhexylacrylate and 0.15 parts of Kayaester-O were added drop-wise under stirring over 3 hours. After finishing the addition, dropping system was washed with 1 part of mineral spirit, and added it into reacting vessel. Subsequently, a mixture of 0.25 parts of Kayaester-O and 10 parts of mineral spirit was added drop-wise over 1 hour. After finishing the addition, a dropping system was washed with 1 part of mineral spirit, and added it into reacting vessel. The reaction was maintained 2 hours, then the reaction mixture was diluted with 15.1 parts of mineral spirit to obtain a colouriess dear dispersant resin solution (B) having a 50 % of solid content and 112,000 of weight average molecular weight.

*Preparation of a non-aqueous dispersion type resin solution (II)*

In a same device as a preparation of dispersant resin solution (B), 66.7 parts of dispersant resin solution (B) was charged, and kept the temperature at 105 °C. Eight parts of methylmethacrylate, 3.6 parts of ethyl acrylate, 5.1 parts of methacrylic acid and 0.42 parts of Niper BMT-K40 were added drop-wise under stirring over 3 hours. After finishing the addition, a dropping system was washed with 0.25 part of mineral spirit, and added it into reacting vessel. Subsequently, a mixture of 0.21 parts of Niper BMT-K40 and 2 parts of mineral spirit was added drop-wise over 1.5 hours. After finishing the addition, a dropping system was washed with 0.25 part of mineral spirit, and added it into reacting vessel. The reaction was maintained 2 hours, then reaction mixture was diluted with 13.5 parts of mineral spirit to obtain a opaque white coloured reacting vessel reacting vessel non-aqueous dispersion type resin solution (II) having a 50% of solid content, 67 mgKOH/g (as for solid content) of acid value and 100,000 of weight average molecular weight.

| Table | | |
|---|---|---|
| Dispersion resin skin component | A | B |
| n-Butylmethacrylate | 25 | 25 |

Table continued

| Dispersion resin skin component | A | B |
|---|---|---|
| 2-Ethylhexylacrylate | 25 | 25 |
| Kayaester-O | 0.4 | 0.4 |
| Mineral spirit | 49.6 | 49.6 |
| Total | 100 | 100 |
| Solid component (%) | 50 | 50 |
| Weight average molecular weight | 99,000 | 112,000 |

Table

| Non-aqueous dispersion type resin solution | I | II |
|---|---|---|
| Dispersant resin A | 66.7 | |
| Dispersant resin B | | 66.7 |
| Monomers | | |
| Methylmethacrylate | 7.95 | 8 |
| Ethylacrylate | 3.6 | 3.6 |
| Methacrylic acid | 5.1 | 5.1 |
| Niper BMT-K40 | 0.415 | 0.42 |
| Solvents | | |
| Mineral spirits | 15.525 | 16 |
| Total | 99.29 | 99.82 |
| Properties | | |
| Solid content (%) | 50 | 50 |
| Acid value of resin (mgKOH/g) | 71 | 67 |
| Weight average molecular weight | 81,000 | 100,000 |
| Core:% by weight of monomers comprising free acid groups | 31% | 31% |

*Preparation of a non-aqueous dispersion type resin solution (III)*

In a same device as a preparation of dispersant resin solution (A), 66.7 parts of dispersant resin solution (B) was charged, and kept the temperature at 105 °C. 9.6 parts of methylmethacrylate, 3.5 parts of ethyl acrylate, 3.9 parts of methacrylic acid and 0.42 parts of Niper BMT-K40 were added dropwise under stirring over 3 hours. After finishing the addition, a dropping system was washed with 0.25 part of mineral spirit, and added it into reacting vessel. Subsequently, a mixture of 0.21 parts of Niper BMT-K40 and 2 parts of mineral spirit was added dropwise over 1.5 hours. After finishing the addition, a dropping funnel was washed with 0.25 part of mineral spirit, and added it into flask. The reaction was maintained 2 hours, then the reaction mixture was diluted with 14 parts of mineral spirit to obtain a opaque white coloured non-aqueous dispersion type resin solution (III) having a 50% of solid content, 52 mgKOH/g (as a solid content) of acid value and 85,000 of weight average molecular weight.

*Preparation of a non-aqueous dispersion type resin solution (IV)*

In a same device as a preparation of dispersant resin solution (A), 66.7 parts of dispersant resin solution (B) was charged, and kept the temperature at 105 °C. 5.2 parts of methylmethacrylate, 3.9 parts of ethyl acrylate, 7.75 parts of methacrylic acid and 0.42 parts of Niper BMT-K40 were added dropwise under stirring over 3 hours. After finishing the addition, a dropping system was washed with 0.25 part of mineral spirit, and added it into reacting vessel. Subsequently, a mixture of 0.21 parts of Niper BMT-K40 and 2 parts of mineral spirit was added dropwise over 1.5 hours. After finishing the addition, a dropping funnel was washed with 0.25 part of mineral spirit, and added it into flask. The reaction was maintained 2 hours, then the reaction mixture was diluted with 14 parts of mineral spirit to obtain a opaque white coloured non-aqueous dispersion type resin solution (, IV) having a 51% of solid content, 101 mgKOH/g (as a solid content) of acid value and 85,000 of weight average molecular weight.

*Preparation of a non-aqueous dispersion type resin solution (V)*

In a same device as a preparation of dispersant resin solution (A), 66.7 parts of dispersant resin solution (B) and 1 part of mineral spirit were charged, and kept the temperature at 105 °C. 12.1 parts of methylmethacrylate, 3.1 parts of ethyl acrylate, 1.25 parts of methacrylic acid and 0.42 parts of Niper BMT-K40 were added dropwise under stirring over 3 hours. After finishing the addition, a dropping system was washed with 1 part of mineral spirit, and added it into reacting vessel. Subsequently, a mixture of 0.21 parts of Niper BMT-K40 and 2 parts of mineral spirit was added dropwise over 1.5 hours. After finishing the addition, a dropping funnel was washed with 0.5 part of mineral spirit, and added it into flask. The reaction was maintained 2 hours, then the reaction mixture was diluted with 12 parts of mineral spirit to obtain a opaque white coloured non-aqueous dispersion type resin solution (V) having a 50 % of solid content, 18 mgKOH/g (as a solid content) of add value and 78,000 of weight average molecular weight.

*Preparation of a non-aqueous dispersion type resin solution (VI)*

In a same device as a preparation of dispersant resin solution (A), 50 parts of dispersant resin solution (B) and 8 parts of mineral spirit were charged, and kept the temperature at 105 °C. 18.4 parts of methylmethacrylate, 4.6 parts of ethyl acrylate, 1.9 parts of methacrylic acid and 0.42 parts of Niper BMT-K40 were added dropwise under stirring over 3 hours. After finishing the addition, a dropping system was washed with 1 part of mineral spirit, and added it into reacting vessel. Subsequently, a mixture of 0.21 parts of Niper BMT-K40 and 2 parts of mineral spirit was added dropwise over 1.5 hours. After finishing the addition, a dropping funnel was washed with 0.5 parts of mineral spirit, and added it into flask. The reaction was maintained 2 hours, then the reaction mixture was diluted with 13 parts of mineral spirit to obtain a opaque white coloured non-aqueous dispersion type resin solution (VI) having a 50 % of solid content and 74,000 of weight average molecular weight.

| Non-aqueous dispersion type resin solution | III | IV | V | VI |
|---|---|---|---|---|
| Dispersant resin B | 66.7 | 66.7 | 66.7 | 50.0 |
| Monomers | | | | |
| Methylmethacrylate | 9.6 | 5.2 | 12.1 | 18.4 |
| Ethylacrylate | 3.5 | 3.9 | 3.1 | 4.6 |
| Methacrylic acid | 3.9 | 7.75 | 1.25 | 1.9 |
| Niper BMT-K40 | 0.63 | 0.63 | 0.63 | 0.63 |
| Solvents | | | | |
| Mineral sprit | 16.5 | 16.3 | 16.5 | 24.5 |
| Total | 100.83 | 100.48 | 100.28 | 100.03 |
| Properties | | | | |
| Solid content (%) | 50.2 | 50.5 | 50.2 | 50.3 |
| Acid value of resin (mgKOH/g) | 51.5 | 101.3 | 18.2 | 26.8 |
| Weight average molecular weight | 85,000 | 85,000 | 78,000 | 74,000 |
| Core: % by weight of monomers comprising free acid groups. | 23% | 46% | 7.6% | 7.6% |

<u>Model Paints</u>

*Model Paints A1-A2 and Comparative Example A*

The following model paints A1-A2 and comparative example A have been prepared:

| PAINT COMPOSITION (% WET WEIGHT) | | | |
|---|---|---|---|
| | A1* | A2* | Comp. Ex. A |
| Xylene | 2.9 | 2.7 | |
| Hydrogenated rosin | 6.4 | 5.9 | |

Table continued

| PAINT COMPOSITION (% WET WEIGHT) | | | |
|---|---|---|---|
| | A1* | A2* | Comp. Ex. A |
| Zinc oxide | 3.4 | 3.1 | |
| Methyl isobutyl ketone | 1.0 | 0.9 | 1.1 |
| NAD resin solution I | 24.4 | 22.6 | 26.7 |
| Antioxidant | 0.5 | 0.4 | 0.5 |
| Thixotropic agents | 1.7 | 1.5 | 1.8 |
| Mineral fibre. | | 4.2 | |
| Titanium dioxide | 3.4 | 3.1 | 3.7 |
| Cuprous oxide | 47.1 | 43.6 | 51.5 |
| Xylene | 1.8 | 1.7 | 2.0 |
| Copper Omadine | 3.3 | 3.1 | 3.6 |
| Xylene | 4.0 | 6.9 | 5.9 |
| Total | 99.9 | 99.7 | 96.8 |
| * It is expected that the % weight of the hydrogenated rosin having conjugated non-aromatic double bonds is the range of 0-5%. | | | |

Comp. Ex. A (1 litre):

All the components are mixed and grinded in a Balls Mill for 12 hours. After grinding, the paint is placed in an oven at 45°C for 24 hours in order to simulate the temperature reached in a batch made in the production plant.

A1 (1 litre):

Pre reaction: Hydrogenated rosin, zinc oxide, methyl isobutyl ketone and xylene are mixed in a Balls Mill for 12 hours to complete the reaction between zinc oxide and rosin. The formulation is completed adding the rest of the components and placed in Ball Mill for 12 hours more. It is expected that at least 95% of the rosin has reacted to form metal resinate.
After grinding, the paint is placed in an oven at 45°C for 24 hours, in order to simulate the temperature reached in a batch made in the production plant.

A2 (0.3 litre):

Pre reaction: Hydrogenated rosin, zinc oxide, methyl isobutyl ketone and xylene are mixed in a glass jar, with pearl glasses, that is subsequently placed on a Red devil's shaker for 50 minutes to complete the reaction between zinc oxide and rosin. It is expected that at least 95% of the rosin has reacted to form metal resinate.
The formulation is completed adding the rest of the components and placed in Red devil's shaker for 4 times 50 minutes. After grinding, the paint is placed in an oven at 45°C for 24 hours in order to simulate the temperature reached in a batch made in the production plant.

Model paints B1-B5 and Comparative Examples 1, 4-10

The following model paints B1-B5 and comparative examples 1 and 4-10 were prepared in order to illustrate the advantages of the invention:
All components were mixed in a 2L can with glass pearls (proportion: 1/3 of glass pearls, 1/3 of paint components, 1/3 or air) and placed in a "Red devil" shaker until a fineness of grind of a maximum of 60 μm is reached. After grinding, the paint was separated from the glass pearls by filtration and placed in an oven at 45°C for 24 hours in order to simulate the temperature reached in a batch made in the production plant.

EP 1 458 821 B1

| PAINT COMPOSITION (% WET WEIGHT) | | | | | | | | | | | | | | |
|---|---|---|---|---|---|---|---|---|---|---|---|---|---|---|
| | Model paint B1 | Model paint B2 | Model paint B3 | Model paint B4 | Model paint B5 | Comp. Ex. 1 | Comp. Ex. 4 | Comp. Ex. 5 | Comp. Ex. 6 | Comp. Ex. 7[a] | Comp. Ex.8[b] | Comp. Ex. 9[c] | Comp. Ex.10[d] | Comp. Ex. 11[e] |
| NAD resin solution II | 20.8 | 20.8 | 20.8 | 20.8 | 20.8 | 26.4 | 20.8 | 20.8 | 20.8 | 21.7 | 24.6 | 23.1 | 18.2 | 30.5 |
| | | | | | | | | | | | | | | |
| Zinc resinate of hydrogenated rosin*(>95%) | | 2.8 | 5.6 | | | | | | | | | | | |
| Zinc resinate* (>95%) | 5.6 | | | | | | | | | | | | | |
| Zinc resinate (>95%) of Abletic acid enriched product * | | 2.8 | | | 5.6 | | | | | | | | | |
| Rosin [f] | | | | 5.6 | | | | | | | | | 18.2 | 9.5 |
| Copper oleate (5% copper) [g] | | | | | | | 5.6 | | | | 18.5 | | | |
| Copper napthenate (8% copper)[h] | | | | | | | | 5.6 | | | 7.9 | | | |
| Zinc octylate (8% zinc)[i] | | | | | | | | | 5.6 | | | 13.5 | | |
| *Additives:* | 1.0 | 1.0 | 1.0 | 1.0 | 1.0 | 1.0 | 1.0 | 1.0 | 1.0 | | | | | |
| Aerosil # 200[j] | | | | | | | | | | | | | 0.9 | 1.0 |
| | | | | | | | | | | | | | | |

Table continued

| PAINT COMPOSITION (% WET WEIGHT) | | | | | | | | | | | | | | |
|---|---|---|---|---|---|---|---|---|---|---|---|---|---|---|
|  | Model paint B1 | Model paint B2 | Model paint B3 | Model paint B4 | Model paint B5 | Comp. Ex. 1 | Comp. Ex. 4 | Comp. Ex. 5 | Comp. Ex. 6 | Comp. Ex. 7[a] | Comp. Ex.8[b] | Comp. Ex. 9[c] | Comp. Ex.10[d] | Comp. Ex. 11[e] |
| *Pigments:* | | | | | | | | | | | | | | |
| Red oxide rouge [k] | | | | | | | | | | 9.1 | 10.2 | 9.6 | 3.6 | 3.8 |
| Titanium dioxide[l] | 3.4 | 3.4 | 3.4 | 3.4 | 3.4 | 3.4 | 3.4 | 3.4 | 3.4 | | | | | |
| *Antifouling agents:* | | | | | | | | | | | | | | |
| Cuprous oxide[m], | 55.0 | 55.0 | 55.0 | 55.0 | 55.0 | 55.0 | 55.0 | 55.0 | 55.0 | 36.2 | 40.9 | 38.5 | 18.2 | 19.0 |
| Zinc pyrithione [n] | | | | | | | | | | 1.8 | 2.0 | 1.9 | | |
| Copper Omadine[o] | 2.0 | 2.0 | 2.0 | 2.0 | 2.0 | 2.0 | 2.0 | 2.0 | 2.0 | | | | | |
| *Fillers:* | | | | | | | | | | | | | | |
| Zinc oxide [p] | 2.0 | 2.0 | 2.0 | 2.0 | 2.0 | 2.0 | 2.0 | 2.0 | 2.0 | | | | | |
| Calcium carbonate[q] | | | | | | | | | | | | | 18.2 | 19.0 |
| Talc[r] | | | | | | | | | | 2.7 | 3.1 | 2.9 | | |
| *Solvents:* | | | | | | | | | | | | | | |
| Xylene | 8.9 | 8.9 | 8.9 | 8.9 | 8.9 | 8.9 | 8.9 | 8.9 | 8.9 | | | | 22.7 | 17.1 |
| Mineral Spirit | | | | | | | | | | 10.0 | 11.3 | 10.6 | | |
| Methyl isobutyl ketone | 1.25 | 1.25 | 1.25 | 1.25 | 1.25 | 1.25 | 1.25 | 1.25 | 1.25 | | | | | |
| Notes to the above table:<br>a) JP2000-63709 example 1. NAD of example replaced with NAD solution II by dry weight. | | | | | | | | | | | | | | |

b) JP2000-63709 example 2. NAD of example replaced with NAD solution II by dry weight.

c) JP2000-63709 example 5. NAD of example replaced with NAD solution II by dry weight.

d) US 5,374,665 example 3. NAD of example replaced with NAD solution II by dry weight.

e) US 5,374,665 example 4. NAD of example replaced with NAD solution II by dry weight.

f) GUM ROSIN, WW GRADE, CANGWU COUNTY ROSIN PLANT - CHINA, % weight of resin acids having conjugated double bonds: 77%.

g) Cu-OLEATE 5%BA, DIC (Dainippon Ink and Chemicals Incorporated)

h) Cu-NAPHTENATE 8%L, DIC (Dainippon Ink and Chemicals Incorporated)

i) Zn-OCTOATE 8%, DIC (Dainippon Ink and Chemicals Incorporated)

i) HDK N 20, WACKER CHEMIE, GERMANY

k) MICRONOX H, PROMINDSA, SPAIN

l) TITANIUM DIOXIDE PRETIOX RG-15, PRECHEZA A.S., CZECH REPUBLIC

m) NA-CUPROUS OXIDE RED, SPIESS-URANIA CHEMICALS GMBH, GERMANY

n) ZINC OMADINE, ARCH CHEMICALS INC., IRELAND

o) COPPER OMADINE, ARCH CHEMICALS INC., IRELAND

p) ZINC OXIDE EXTRA PURO 1° WHITE SEAL, FABRICA ESPAÑOLA DE BLANCO DE ZINC, SPAIN

q) OMYACARB 5, OMYA INC., USA

r) LUZENAC 20 MO, TALC DE LUZENAC, FRANCE

* The % weight of the metal resinate constituents having conjugated non-aromatic double bonds are as follows: zinc resinate of hydrogenated rosin: 4%; zinc resinate: 78%; zinc resinate of abietic acid enriched product (Abietic acid, 75%, Fluka, Germany): 74%. The content of conjugated non-aromatic double bonds was determined by the FT-IR method described herein.

*Model paints C1-C3*

Pre-reaction: Hydrogenated rosin, zinc oxide, methyl isobutyl ketone and xylene were mixed in a 2L can with a 1/3 of the total volume of glass pearls for 1 hour in a shaker of the type "Red Devil" in order to complete the reaction between zinc oxide and rosin. It is expected that at least 95% of the rosin has reacted to form metal resinate.

The formulation was completed by adding the remaining components (final proportion: 1/3 of glass pearls, 1/3 of paint components, 1/3 or air) and placing the mixing the components in a "Red devil" shaker until a fineness of grind of a maximum of 60 µm is reached. After grinding, the paint was separated from the glass pearls by filtration and placed in an oven at 45°C for 24 hours in order to simulate the temperature reached in a batch made in the production plant.

| Paint Compositions (% wet weight) | | | |
|---|---|---|---|
| | C1* | C2* | C3* |
| Xylene[a)] | 7.6 | 7.4 | 7.4 |
| Hydrogen ated rosin [b)] | 5.6 | 5.5 | 5.5 |
| Zinc oxide [c)] | 2.7 | 2.6 | 2.6 |
| Methyl isobutyl ketone [d)] | 1.3 | 1.3 | 1.3 |
| NAD resin solution II | 20.3 | | |
| NAD resin solution III | | 21.7 | |
| NAD resin solution IV | | | 21.6 |
| Additives | 1.1 | 1.0 | 1.0 |
| Titanium dioxide [e)] | 3.5 | 3.4 | 3.4 |
| Cuprous oxide [f)] | 54.1 | 53.2 | 53.3 |
| Copper Omadine [g)] | 3.9 | 3.9 | 3.9 |
| Total | 100.1 | 100 | 100 |
| a) XYLENE, PROQUIBASA - SPAIN b) FORAL AX-E, HERCULES, HOLLAND c) ZINC OXIDE EXTRA PURO 1° WHITE SEAL, FABRICA ESPAÑOLA DE BLANCO DE ZINC-SPAIN d) METIL ISOBUTIL CETONA, QUIMIDROGA - SPAIN e) TI-PURE R 902, DU PONT, MEXICO f) NORDOX CUPROUS OXIDE PAINT MICRO-MILLED, NORDOX INDUSTRIER AS - NORWAY g) COPPER OMADINE, ARCH CHEMICALS - IRELAND * It is expected that the % weight of the hydrogenated rosin having conjugated non-aromatic double bonds is the range of 0-5%. | | | |

*Model paints D1-D2*

Preparation of model paints D1-D2

| PAINT COMPOSITION (% WET WEIGHT) | | |
|---|---|---|
| | Model paint D1 | Model paint D2 |
| Rosin a) | 4.41 | 4.41 |
| Zinc oxide | 5.00 | 5.00 |
| Xylene | 4.41 | 4.41 |
| NAD resin solution V | 20.58 | |
| NAD resin solution VI | | 20.58 |
| Cuprous oxide | 46.00 | 46.00 |
| Copper Omadine | 4.00 | 4.00 |
| Iron oxide | 4.00 | 4.00 |
| Thixotropic agents | 3.00 | 3.00 |
| Xylene | 8.60 | 8.60 |
| Total | 100.00 | 100.00 |
| % weigh of rosin acids having conjugated non-aromatic double bonds 77% | | |

*Preparation method*

Model paints D1 and D2 (1 litre):

Pre reaction: Rosin, zinc oxide, xylene were mixed in 2 L can with glass pearls in high speed disperser for 2 hours to complete the reaction between zinc oxide and rosin. It is expected that at least 95% of the rosin has reacted to form metal resinate.

The formulation was completed by adding the remaining of the components and placed in 2dl can with glass pearls in high-speed disperser for 2 hours.

Results

*Water Jet Test*

| Model paint | Remarks after 2 months | Remarks after recoated | Remarks after 2 more months |
|---|---|---|---|
| Comp. Ex. A | Thin leaching layer | 0S0 | Cracking 452 |
| A1 | Thin leaching layer | 0S0 | 0S0 |
| A2 | Thin leaching layer | 0S0 | 0S0 |

*Cyclic blister box*

| Code Paint | 1day | 2 weeks | 6 weeks | 8 weeks | 18 weeks | 30 weeks |
|---|---|---|---|---|---|---|
| Comp. Ex. A | 0S0 | 0S0 | 0S0 | 3S3a | 4S3b | 453b |
| A1 | 0S0 | 0S0 | 0S0 | 0S0 | 0S0 | 0S0 |
| A2 | 0S0 | 0S0 | 0S0 | 0S0 | 0S0 | 0S0 |

*Evaluation of metal resinate formation*

| Sample | Type of resinate | % metal Resinate $\frac{\text{Metal Resinate}}{\text{(rosin)}}$ |
|---|---|---|
| Binder fraction from complete paint, Model Paint B4 | Zn | >95% |
| Binder fraction from complete paint, Comp. Ex 10 | Cu | 16% |
| Binder fraction from complete paint, Comp. Ex.11 | Cu | 13% |
| Binder fraction from complete paint, Model Paint B4 (after storing 1 month at 45°C) | Zn | >95% |
| Binder fraction from complete paint, Comp. Ex.10 (after storing 1 month at 45°C) | Cu | 21% |
| Binder fraction from complete paint, Comp. Ex.11 (after storing 1 month at 45°C) | Cu | 20% |

*Artificial aging of paints using UV lamps and water condensation cycles*

| Paint composition | 1 day | 3 days | 7 days | 10 days | 14 days | 22 days | 30 days | 40 days | 47 days |
|---|---|---|---|---|---|---|---|---|---|
| B1 | 0S0 | 0S0 | 0S0 | 0S0 | 0S0 | 0S0 | 0S0 | 0S0 | 0S0 |
| B2 | 0S0 | 0S0 | 0S0 | 0S0 | 0S0 | 0S0 | 0S0 | 0S0 | 0S0 |
| B3 | 0S0 | 0S0 | 0S0 | 0S0 | 0S0 | 0S0 | 0S0 | 0S0 | 0S0 |
| B4 | 0S0 | 0S0 | 0S0 | 0S0 | 0S0 | 0S0 | 0S0 | 0S0 | 0S0 |
| B5 | 0S0 | 0S0 | 0S0 | 0S0 | 0S0 | 0S0 | 0S0 | 0S0 | 0S0 |
| Comp. Ex. 10 | 0S0 | 5S1 | 5S3 | 5S3 | 5S3 | 5S4 | 5S4 | 5S4 | 5S4 |
| Comp. Ex. 11 | 0S0 | 5S1 | 5S2 | 5S2 | 5S2 | 5S2 | 5S2 | 5S2 | 5S2 |

*Pendulum hardness (DFT 100±15 µm)*

| Paint composition | Oscillation | Average | Evaluation |
|---|---|---|---|
| B1 | 17,19,18 | 18 | excellent |
| B2 | 21,21,21 | 21 | excellent |
| B3 | 16,16,16 | 16 | excellent |
| B4 | 19,20,21 | 20 | excellent |
| B5 | 35,35,32 | 33 | excellent |
| Comp. Ex. 1 | 7,8,7 | 7 | Bad |
| Comp. Ex. 4 | 10,10,10 | 10 | Bad |
| Comp. Ex. 5 | 8,8,8 | 8 | Bad |
| Comp. Ex. 6 | 5,5,5 | 5 | Bad |
| Comp. Ex. 7 | 6,6,6 | 6 | Bad |

Table continued

| Paint composition | Oscillation | Average | Evaluation |
|---|---|---|---|
| Comp. Ex. 8 | 6,6,6 | 6 | Bad |
| Comp. Ex. 9 | 3,3,3 | 3 | Bad |
| Comp. Ex. 10 | 6,8,7 | 7 | Bad |
| Comp. Ex. 11 | 5,5,5 | 5 | Bad |
| > 15:       excellent<br>10< and <or equal to 15:      fair<br>< or equal to 10:     bad | | | |

*Antifouling and polishing data*

Static Test Villanova variant

| Composition | 8 weeks | 16 weeks |
|---|---|---|
| B1 | excellent | excellent |
| Comp ex. 1 | excellent | Fair |
| Comp ex. 7 | excellent | Fair |
| Comp ex. 8 | excellent | Good |
| Comp ex. 9 | excellent | Fair |
| Comp ex. 10 | Fair | Poor |
| Comp ex. 11 | Poor | Poor |

| | Immersion time (weeks) | | |
|---|---|---|---|
| Composition | 10 | 17 | 34 |
| C1 | excellent | excellent | excellent |
| C2 | excellent | excellent | excellent |
| C3 | excellent | excellent | excellent |
| Blank | Poor | Poor | Poor |

The above examples illustrate that the compositions of the present invention provide excellent antifouling properties. These results are superior to those obtained from the reference examples.

Static test Toba variant

| | Immersion time (months) |
|---|---|
| Composition | 9 |
| D1 | excellent |
| D2 | excellent |
| Blank | Poor |

*Polishing rate test*

| Composition | Polishing |
|---|---|
| B1 | 2 $\mu$m/10000 NM |
| B2 | 1 $\mu$m/10000 NM |
| B3 | 1 $\mu$m/10000 NM |
| B4 | 2 $\mu$m/10000 NM |
| B5 | 2 $\mu$m/10000 NM |
| Comp. Ex. 1 | No polishing |
| Comp. Ex. 4 | No polishing |
| Comp. Ex. 5 | No polishing |
| Comp. Ex. 6 | No polishing |
| Comp. Ex. 7 | No polishing |
| Comp. Ex. 8 | No polishing |
| Comp. Ex. 9 | No polishing |
| Comp. Ex. 10 | No polishing |
| Comp. Ex. 11 | No polishing |

The results clearly indicate that the compositions of the invention have excellent polishing properties, whereas the reference compositions have insufficient polishing properties.

**Claims**

1.   An antifouling paint composition comprising a non-aqueous dispersion resin, said resin having a core-shell structure which is constituted of

(a) a hydrophilic core component comprising a polymer of ethylenically unsaturated monomers, 5-75% by weight of said monomers comprising free acid groups and at the most 3% by weight of said monomers comprising silyl ester groups,
(b) a shell component comprising a polymer of ethylenically unsaturated monomers, wherein less than 3% by weight of said monomers comprising free acid groups or silyl ester groups,

said resin having an acid value of in the range of 15-400 mg KOH/g wherein the core component accounts for at least 80% of the acid value of the resin,
said paint composition further comprising rosin wherein at the most 90% by weight of the rosin has conjugated, non-aromatic double bonds, at least 25% of said rosin being in the form of a metal resinate, said metal resinate constituting in the range of 1-40% by wet weight of the composition, the dry weight ratio between (i) NAD and (ii) rosin and metal resinates being in the range of 100: 15 to 15: 100.

2.   The antifouling paint composition according to claim 1, wherein at least 40%, such as at least 50%, e.g. at least 60%, in particular at least 75%, or event at least 90%, of the rosin is in the form of a metal resinate.

3.   The antifouling paint composition according to any of the preceding claims, wherein the metal resinate salt constitutes in the range of 1-30%, e.g. 2-13%, such as 2.5-10%, by wet weight of the composition.

4.   The antifouling paint composition according to any of the preceding claims, wherein the metal is selected from zinc, copper, calcium, magnesium, iron and aluminium, such as zinc and calcium.

**5.** The antifouling paint composition according to claim 4, wherein the metal is zinc.

**6.** The antifouling paint composition according to any of the preceding claims, which further comprises fibres.

**7.** The antifouling paint composition according to claim 6, wherein the fibres are inorganic fibres.

**8.** The antifouling paint composition according to any of the preceding claims, wherein the dry matter of the non-aqueous dispersion resin constitutes in the range of 2-30% by wet weight of the paint composition.

**9.** The antifouling paint composition according to any of the preceding claims, wherein the shell component is hydrophobic.

**10.** The antifouling paint composition according to any of the preceding claims, which comprises:

2-30% by wet weight of the composition of dry matter of the non-aqueous dispersion resin,
1-15% by wet weight of the composition of rosin and metal resinate,
2-75% by wet weight of the composition of antifouling agents,
0-50% by wet weight of the composition of fibres,
0.1-40% by wet weight of the composition of pigments, fillers, dyes and additives,
0-10% by wet weight of the composition of dry matter of further binder components, and 10-60% by wet weight of the composition of solvents.

**11.** The antifouling paint composition according to any of the preceding claims, which comprises:

4-25% by wet weight of the composition of dry matter of the non-aqueous dispersion resin,
2-13% by wet weight of the composition of rosin and metal resinate,
5-75% by wet weight of the composition of antifouling agents,
0-25% by wet weight of the composition of fibres,
0.1-30% by wet weight of the composition of pigments, fillers, dyes and additives,
0-10% by wet weight of the composition of dry matter of further binder components, and 10-40% by wet weight of the composition of solvents.

**12.** The antifouling paint composition according to any of the preceding claims, which comprises:

5-20% by wet weight of the composition of dry matter of the non-aqueous dispersion resin,
2.5-10% by wet weight of the composition of rosin and metal resinate,
5-60% by wet weight of the composition of antifouling agents,
0-10% by wet weight of the composition of fibres,
0.1-30% by wet weight of the composition of pigments, fillers, dyes and additives,
0-10% by wet weight of the composition of dry matter of further binder components, and 10-40% by wet weight of the composition of solvents.

**Patentansprüche**

**1.** Fäulnisverhindernde Farbzusammensetzung mit einem nichtwässerigen Dispersionsharz, das eine Kern-Schalen-Struktur aufweist, die folgendermaßen zusammengesetzt ist:

(a) eine hydrophile Kernkomponente umfassend ein Polymer aus ethylenisch ungesättigten Monomeren, von denen 5 bis 75 Gew.-% freie Säuregruppen und höchstens 3 Gew.-% der Monomeren Silylestergruppen aufweisen,
(b) eine Schalenkomponente umfassend ein Polymer aus ethylenisch ungesättigten Monomeren, von denen weniger als 3 Gew.-% freie Säuregruppen oder Silylestergruppen enthalten,

wobei das Harz eine Säurezahl im Bereich von 15 bis 400 mg KOH/g aufweist, wobei die Kernkomponente zu mindestens 80 % der Säurezahl des Harzes beiträgt,
wobei die Farbzusammensetzung weiterhin Kolophoniumharz aufweist, wobei höchstens 90 Gew.-% des Kolophoniumharzes konjugierte, nichtaromatische Doppelbindungen aufweist, mindestens 25 % des Kolophoniumharzes in Form eines Metall-Resinates vorliegt, wobei das Metall-Resinat einen Bereich von 1 bis 40 % der Feuchtgutmasse der Zusammensetzung ausmacht, wobei das Trockenmassenverhältnis zwischen (i) NAD und (ii) Kolophoniumharz zu Metall-Resinaten im Bereich von 100:15 bis 15:100 liegt.

2. Farbzusammensetzung nach Anspruch 1, wobei mindestens 40 %, wie etwa mindestens 50 %, beispielsweise mindestens 60 %, insbesondere 75 % oder sogar bis zu 90 % des Kolophoniumharzes in Form des Metall-Resinates vorliegt.

3. Farbzusammensetzung nach einem der vorhergehenden Ansprüche,
wobei das Metallharzsäuresalz einen Bereich von 1 bis 30 %, beispielsweise einen Bereich von 2 bis 13 %, wie etwa 2,5 bis 10 % des Nassgewichtes der Zusammensetzung ausmacht.

4. Farbzusammensetzung nach einem der vorgehenden Ansprüche,
wobei das Metall aus der Gruppe ausgewählt ist, die Zink, Kupfer, Kalzium, Magnesium, Eisen und Aluminium aufweist, wie etwa Zink oder Kalzium.

5. Farbzusammensetzung nach Anspruch 4, wobei das Metall Zink ist.

6. Farbzusammensetzung nach einem der vorhergehenden Ansprüche, welche ferner Fasern aufeist.

7. Farbzusammensetzung nach Anspruch 6, wobei die Fasern anorganische Fasern sind.

8. Farbzusammensetzung nach einem der vorhergehenden Ansprüche, wobei die Trockenmasse des wasserfreien Dispersionsharzes im Bereich von 2 bis 30 % der Feuchtgutmasse der Farbzusammensetzung liegt.

9. Farbzusammensetzung nach einem der vorhergehenden Ansprüche, wobei die Schalenkomponente hydrophob ist.

10. Farbzusammensetzung nach einen vorangehenden Ansprüche, welche folgendes aufweist:

2 bis 30 % des Gewichts der Trockenmasse der Zusammensetzung aus wasserfreiem Dispersionsharz,
1 bis 15 % des Gewichts der Trockenmasse der Zusammensetzung aus Kolophoniumharz und Metall-Resinat,
2 bis 75 % des Gewichts der Trockenmasse der Zusammensetzung aus fäulnisverhindernden Mitteln,
0 bis 50 % des Gewichts der Trockenmasse der Zusammensetzung aus Fasern,
0,1 bis 40 % des Gewichts der Trockenmasse der Zusammensetzung aus Pigmenten, Füllstoffen, Farbstoffen und Additiven,
0 bis 10 % des Gewichts der Trockenmasse der Zusammensetzung aus Trockenmasse von weiteren Bindemittelkomponenten, und
10 bis 60 % des Gewichts der Trockenmasse der Zusammensetzung aus Lösungsmitteln.

11. Farbzusammensetzung nach einem der vorhergehenden Ansprüche, welche folgendes aufweist:

4 bis 25 % des Gewichts der Trockenmasse der Zusammensetzung aus wasserfreiem Dispersionsharz,
2 bis 13 % des Gewichts der Trockenmasse der Zusammensetzung aus Kolophoniumharz und Metall-Resinat,
5 bis 75 % des Gewichts der Trockenmasse der Zusammensetzung aus fäulnisverhindernden Mitteln,
0 bis 25 % des Gewichts der Trockenmasse der Zusammensetzung aus Fasern,
0,1 bis 30 % des Gewichts der Trockenmasse der Zusammensetzung aus Pigmenten, Füllstoffen, Farbstoffen und Additiven,
0 bis 10 % des Gewichts der Trockenmasse der Zusammensetzung aus Trockenmasse von weiteren Bindemittelkomponenten, und
10 bis 40 % des Gewichts der Trockenmasse der Zusammensetzung aus Lösungsmitteln.

12. Farbzusammensetzung nach einem der vorhergehenden Ansprüche, welche folgendes aufweist:

5 bis 25 % des Gewichts der Trockenmasse der Zusammensetzung aus Trockenmasse des wasserfreien Dispersionsharzes,
2,5 bis 10 % des Gewichts der Trockenmasse der Zusammensetzung aus Kolophoniumharz und Metall-Resinat,
5 bis 60 % des Gewichts der Trockenmasse der Zusammensetzung aus fäulnisverhindernden Mitteln,
0 bis 10 % des Gewichts der Trockenmasse der Zusammensetzung aus Fasern,

0,1 bis 30 % des Gewichts der Trockenmasse der Zusammensetzung aus Pigmenten, Füllstoffen, Farbstoffen und Additiven,
0 bis 10 % des Gewichts der Trockenmasse der Zusammensetzung aus Trockenmasse von weiteren Bindemittelkomponenten, und
10 bis 40 % des Gewichts der Trockenmasse der Zusammensetzung aus Lösungsmitteln.

**Revendications**

1. Composition de peinture anti-salissure comprenant une résine de dispersion non aqueuse, ladite résine ayant une structure coeur-enveloppe constituée par

(a) un composant de coeur hydrophile comprenant un polymère de monomères éthyléniquement insaturés, 5-75% en poids desdits monomères comprenant des groupes acide libre et au plus 3% en poids desdits monomères comprenant des groupes ester silylique,
(b) un composant d'enveloppe comprenant un polymère de monomères éthyléniquement insaturés, moins de 3% en poids desdits monomères comprenant des groupes acide libre ou des groupes ester silylique,

ladite résine ayant un indice d'acide dans la plage de 15-400 mg KOH/g, le composant de coeur intervenant pour au moins 80% dans l'indice d'acide de la résine,
ladite composition de peinture comprenant en outre de la colophane dont au plus 90% en poids a des doubles liaisons conjuguées, non aromatiques, au moins 25% sont sous la forme d'un résinate de métal, ledit résinate de métal représentant 1-40% du poids humide de la composition, le rapport en poids sec entre (i) la DNA et (ii) la colophane et les résinates de métal étant dans la plage de 100 : 15 à 15 : 100.

2. Composition de peinture anti-salissure selon la revendication 1, dans laquelle au moins 40%, comme au moins 50%, par exemple au moins 60%, en particulier au moins 75% ou même au moins 90%, de la colophane est sous la forme d'un résinate de métal.

3. Composition de peinture anti-salissure selon l'une quelconque des revendications précédentes, dans laquelle le sel de résinate de métal représente 1-30%, par exemple 2-13%, comme 2,5-10%, en poids humide de la composition.

4. Composition de peinture anti-salissure selon l'une quelconque des revendications précédentes, dans laquelle le métal est choisi parmi le zinc, le cuivre, le calcium, le magnésium, le fer et l'aluminium, comme le zinc et le calcium.

5. Composition de peinture anti-salissure selon la revendication 4, dans laquelle le métal est le zinc.

6. Composition de peinture anti-salissure selon l'une quelconque des revendications précédentes, qui comprend en outre des fibres.

7. Composition de peinture anti-salissure selon la revendication 6, dans laquelle les fibres sont des fibres inorganiques.

8. Composition de peinture anti-salissure selon l'une quelconque des revendications précédentes, dans laquelle la matière sèche de la résine de dispersion non aqueuse constitue 2-30% en poids humide de la composition de peinture.

9. Composition de peinture anti-salissure selon l'une quelconque des revendications précédentes, dans laquelle le composant d'enveloppe est hydrophobe.

10. Composition de peinture anti-salissure selon l'une quelconque des revendications précédentes, qui comprend :

2-30% en poids humide de la composition, de matière sèche de la résine de dispersion non aqueuse,
1-15% en poids humide de la composition, de colophane et du résinate de métal,
2-75% en poids humide de la composition, d'agents antisalissures,
0-50% en poids humide de la composition, de fibres,
0,1-40% en poids humide de la composition, de pigments, de charges, de colorants et d'additifs,
0-10% en poids humide de la composition, de matière sèche d'autres composants liants, et
10-60% en poids humide de la composition, de solvants.

11. Composition de peinture anti-salissure selon l'une quelconque des revendications précédentes, qui comprend :

4-25% en poids humide de la composition, de matière sèche de la résine de dispersion non aqueuse,
2-13% en poids humide de la composition, de colophane et du résinate de métal,
5-75% en poids humide de la composition, d'agents antisalissures,
0-25% en poids humide de la composition, de fibres,
0,1-30% en poids humide de la composition, de pigments, de charges, de colorants et d'additifs,
0-10% en poids humide de la composition, de matière sèche d'autres composants liants, et
10-40% en poids humide de la composition, de solvants.

12. Composition de peinture anti-salissure selon l'une quelconque des revendications précédentes, qui comprend :

5-20% en poids humide de la composition, de matière sèche de la résine de dispersion non aqueuse,
2,5-10% en poids humide de la composition, de colophane et du résinate de métal,
5-60% en poids humide de la composition, d'agents antisalissures,
0-10% en poids humide de la composition, de fibres,
0,1-30% en poids humide de la composition, de pigments, de charges, de colorants et d'additifs,
0-10% en poids humide de la composition, de matière sèche d'autres composants liants, et
10-40% en poids humide de la composition, de solvants.